# EUROPÄISCHE PATENTSCHRIFT

(11) **EP 2 873 147 B1**
(45) Veröffentlichungstag und Bekanntmachung des Hinweises auf die Patenterteilung: **24.04.2019**
(21) Anmeldenummer: 13732539.5
(22) Anmeldetag: 29.06.2013
(51) Int. Cl.: H02M 3/158, H05B 33/08

(54) **GLEICHSPANNUNGSWANDLER-SCHALTUNGSORDNUNG**
DIRECT CURRENT CONVERTER CIRCUIT ARRANGEMENT
ENSEMBLE DE CIRCUITS DE CONVERTISSEUR CONTINU-CONTINU

(30) Priorität: 12.07.2012 DE 102012106261
(43) Veröffentlichungstag der Anmeldung: 20.05.2015
(73) Patentinhaber: HELLA GmbH & Co. KGaA, 59552 Lippstadt (DE)
(72) Erfinder: DAUB, Wolfgang, 59609 Anröchte (DE)
(86) Internationale Anmeldenummer: PCT/EP2013/063753
(87) Internationale Veröffentlichungsnummer: WO 2014/009184

(56) Entgegenhaltungen:
- EP-A1- 2 615 731
- US-A1- 2006 285 370
- US-A1- 2013 134 935
- THOUNTHONG P ET AL: "Fuel cell high-power applications", IEEE INDUSTRIAL ELECTRONICS MAGAZINE, IEEE, US, Bd. 3, Nr. 1, 1. März 2009 (2009-03-01), Seiten 32-46, XP011280986, ISSN: 1932-4529, DOI: 10.1109/MIE.2008.930365

## Beschreibung

Die Erfindung betrifft eine Gleichspannungswandler-Schaltungsanordnung
- mit einem Mehrphasen-Gleichspannungswandler umfassend mehrere Wandlerschaltungen, wobei jede Wandlerschaltung wenigstens ein steuerbares Schaltelement aufweist, und
- mit einer Steuerung zur Erzeugung von mehreren Treibersignalen, wobei die Treibersignale unterschiedliche Phasen haben und mit jedem Treibersignal ein Schaltbetrieb einer der Wandlerschaltungen des Mehrphasen-Gleichspannungswandlers steuerbar ist.

Aus dem Stand der Technik sind Gleichspannungswandler mit einer Wandlerschaltung und einer Steuerung bekannt, bei denen die Steuerung ein Treibersignal zum Durchführen des Schaltbetriebs der Wandlerschaltung erzeugt. Mittels der Steuerung kann die Wandlerschaltung an die Betriebsbedingungen des Gleichspannungswandlers, insbesondere der Belastung des Gleichspannungswandlers angepasst werden. Ein Nachteil eines solchen Gleichspannungswandlers ist, dass die Wandlerschaltung bei nur geringer Belastung des Gleichspannungswandlers einen schlechten Wirkungsgrad hat.

Aus dem Dokument DE 11 2008 004 030 T5 ist ein Mehrphasen-Gleichspannungswandler bekannt. Dieser Gleichspannungswandler weist eine Mehrzahl von Wandlerschaltungen auf, die zueinander parallel geschaltet sind. Die Zahl von Wandlerschaltungen, die in Betrieb sind, kann geändert werden, wobei jede der betriebenen Wandlerschaltungen einen Schaltbetrieb durchführt. Der Gleichspannungswandler weist eine Steuerung auf, die eine Mehrzahl von Treibersignalen für die Wandlerschaltungen erzeugt, die unterschiedliche Phasen haben, um Schaltelemente der jeweiligen Wandlerschaltungen zu treiben, wodurch die Schaltbetriebsvorgänge gesteuert werden. Jeder Wandlerschaltung ist eine Phase fest zugeordnet. Die Steuerung bestimmt abhängig von einer Betriebsbedingung des Gleichspannungswandlers die Zahl von Wandlerschaltungen, die zu betreiben sind. Je nach den Betriebsbedingungen werden demnach Wandlerschaltungen des Gleichspannungswandlers abgeschaltet, d.h. es werden keine Treibersignale erzeugt, die die Phase haben, die diesen Wandlerschaltungen zugeordnet sind.

Der aus dem Dokument DE 11 2008 004 030 T5 bekannte Mehrphasen-Gleichspannungswandler kann an die Belastung des Gleichspannungswandlers angepasst werden. Das hat den Vorteil, dass die Wandlerschaltungen des Mehrphasen-Gleichspannungswandlers bei unterschiedlichen Belastungen des Mehrphasen-Gleichspannungswandlers ausreichend belastet werden können, um sie mit einem guten Wirkungsgrad zu betreiben. Ein Nachteil des Mehrphasen-Gleichspannungswandlers ist allerdings, dass die elektromagnetische Störaussendung zunimmt, wenn nicht alle Phasen aktiv sind, d.h. alle Wandlerschaltungen betrieben werden. Eingangs- und Ausgangsfilter müssen aufwändig an Taktfrequenzen einer Phase und unter umständen auch für subharmonische Störungen ausgelegt werden.

Auch aus dem Dokument DE 10 2009 054 957 A1 ist ein Mehrphasen-Gleichspannungswandler bekannt. Der Gleichspannungswandler weist eine Mehrzahl von Wandlerschaltungen auf, die zueinander parallel geschaltet sind. Die Zahl von Wandlerschaltungen, die zu betreiben sind, kann geändert werden. Der Gleichspannungswandler weist eine Steuerung auf, die eine Mehrzahl von Treibsignalen für die Wandlerschaltungen erzeugt, die unterschiedliche Phasen zueinander haben, um Schaltelemente der jeweiligen Wandlerschaltungen zu treiben, wodurch die Schaltbetriebsvorgänge gesteuert werden. Die Steuerung bestimmt abhängig von einer Betriebsbedingung des Gleichspannungswandlers die Zahl von Wandlerschaltungen, die zu betreiben sind, und bestimmt die Phasenunterschieden zwischen den Treibsignalen, wenn die Steuerung die Zahl von Wandlerschaltungen, die zu betreiben sind, als zwei oder mehr bestimmt. Mit diesem Mehrphasen-Gleichspannungswandler kann mit hohem Wirkungsgrad Leistung in einem großen Bereich übertragen werden. Allerdings nimmt bei einer geringen Belastung die Anzahl der Phasen ab, was eine Zunahme von Rippeln zur Folge hat.

Auch aus den Dokumenten US 2006/285370 A1 und Thounthong P. et al, "Fuel cell high-power applications", IEEE Industrial Electronics Magazine, IEEE, US, Bd. 3, Nr. 1 vom 01.03.2009, Seiten 32 bis 46 sind Gleichspannungswandler-Schaltungsanordnungen bekannt.

Der Erfindung liegt die Aufgabe zugrunde, eine alternative Lösung für einen Mehrphasen-Gleichspannungswandler zu finden, der unterschiedlichen Leistungsanforderungen gerecht wird und darüber hinaus auch zur Verbindung von mehr als zwei Netzen geeignet und eingerichtet ist.

Diese Aufgabe wird dadurch gelöst,
- dass die Gleichspannungswandler-Schaltungsanordnung wenigstens einen weiteren Mehrphasen-Gleichspannungswandler zum Transportieren von Energie zwischen zwei Netzen umfassend mehrere Wandlerschaltungen aufweist, wobei jede Wandlerschaltungen wenigstens ein erstes steuerbares Schaltelement aufweist,
- dass der Schaltbetrieb jeder Wandlerschaltung jedes weiteren Mehrphasen-Gleichspannungswandlers mit einem der von der Steuerung erzeugbaren Treibersignalen steuerbar ist und
- dass die Steuerung zum Ermöglichen oder Unterbinden des Energietransports mittels eines der Mehrphasen-Gleichspannungswandlers geeignet und eingerichtet ist,
- dass in Reihe zu jedem Mehrphasen-Gleichspannungswandler der Gleichspannungswandler-Schaltungsanordnung wenigstens ein zweites steuerbares Schaltelement angeordnet ist, wobei die zweiten steuerbaren Schaltelemente mittels der Steuerung zum Ermöglichen oder Unterbinden des Energietransports zum Schließen bzw. Öffnen ansteuerbar sind.

Sind die zweiten Schaltelemente in Reihe zu einem Mehrphasen-Gleichspannungswandler geschlossen, kann mit diesem Mehrphasen-Gleichspannungswandler Energie übertragen werden, wenn die wenigstens einen ersten steuerbaren Schaltelemente der Wandlerschaltungen dieses Mehrphasen-Gleichspannungswandlers von der Steuerung mittels der Treibersignale entsprechend angesteuert werden. Sind die zweiten Schaltelemente in Reihe zu diesem Mehrphasen-Gleichspannungswandler dagegen geöffnet, ist ein Energietransport über diesen Mehrphasen-Gleichspannungswandler unterbunden und zwar auch dann, wenn die ersten Schaltelemente der Wandlerschaltungen dieses Mehrphasen-Gleichspannungswandlers von der Steuerung mittels der Treibersignale in den Schaltbetrieb gesetzt werden.

Eine erfindungsgemäße Gleichspannungswandler-Schaltungsanordnung kann einen ersten Anschluss zur Verbindung mit einem ersten Netz und einen zweiten Anschluss zur Verbindung mit einem zweiten Netz aufweisen. Die Reihenschaltungen aus den Mehrphasen-Gleichspannungswandlern und den zweiten steuerbaren Schaltelementen können dann zwischen dem ersten Anschluss und dem zweiten Anschluss parallel geschaltet sein. In dieser Ausführung der Erfindung kann Energie zwischen dem ersten und dem zweiten Netz übertragen werden. Dazu kann in Abhängigkeit der zu übertragenden Leistung einer der Mehrphasen-Gleichspannungswandler, mehrere der Mehrphasen-Gleichspannungswandler oder alle Mehrphasen-Gleichspannungswandler genutzt werden. Ist die Übertragung mit nur geringer Leistung erforderlich, werden zum Beispiel nur die zweiten steuerbaren Schaltelemente in Reihe zu einem Mehrphasen-Gleichspannungswandler geschlossen, um den Energietransport über diesen Mehrphasen-Gleichspannungswandler zu ermöglichen, während bei einer Übertragung mit großer Leistung die zweiten steuerbaren Schaltelemente in Reihe zu allen Mehrphasen-Gleichspannungswandlern geschlossen sind.

Eine andere erfindungsgemäße Gleichspannungswandler-Schaltungsanordnung kann einen ersten Anschluss zur Verbindung mit einem ersten Netz, einen zweiten Anschluss zur Verbindung mit einem zweiten Netz und einen dritten Anschluss zur Verbindung mit einem dritten Netz aufweisen. Wenigstens zwei erste Reihenschaltungen aus den Mehrphasen-Gleichspannungswandlern und den zweiten steuerbaren Schaltelementen können zwischen dem ersten Anschluss und dem zweiten Anschluss und wenigstens zwei zweite Reihenschaltungen aus den Mehrphasen-Gleichspannungswandlern und den zweiten steuerbaren Schaltelementen können zwischen dem zweiten Anschluss und dem dritten Anschluss parallel geschaltet sein. Bei dieser Gleichspannungswandler-Schaltungsanordnung ist ein Energietransport zwischen dem ersten und zweiten Netz und zwischen dem zweiten und dritten Netz möglich.

Allgemeiner kann man eine erfindungsgemäße Gleichspannungswandler-Schaltungsanordnung dadurch beschreiben, dass die Gleichspannungswandler-Schaltungsanordnung n Anschlüsse aufweist und dass jeder Anschluss mit einem Netz und über wenigstens zwei parallel geschaltete Reihenschaltungen aus einem der Mehrphasen-Gleichspannungswandler und wenigstens einem der zweiten steuerbaren Schaltelemente mit allen übrigen Anschlüssen oder mit einigen übrigen Anschlüssen verbunden ist.

Die Wandlerschaltungen einer erfindungsgemäßen Gleichspannungswandler-Schaltungsanordnung können eine gemeinsame Masse haben.

Die Mehrphasen-Gleichspannungswandler einer erfindungsgemäßen Gleichspannungswandler-Schaltungsanordnungen können Drosseln aufweisen, über die die Wandlerschaltungen der Mehrphasen-Gleichspannungswandler miteinander gekoppelt sind. Dazu können die Drosseln eines Mehrphasen-Gleichspannungswandler auf einem gemeinsamen Kern angeordnet sein.

Anhand der beigefügten Zeichnung wird die Erfindung nachfolgend näher erläutert. Dabei zeigt:

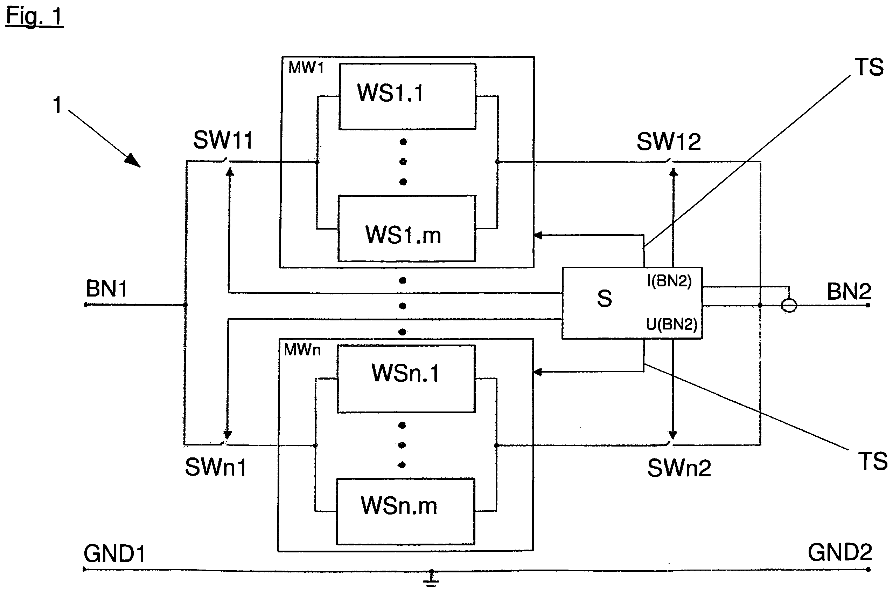

- Fig. 1: ein vereinfachtes Schaltbild einer erfindungsgemäßen Gleichspannungswandler-Schaltungsanordnung.

Die in der Figur 1 dargestellte Gleichspannungswandler-Schaltungsanordnung 1 verbindet ein erstes Bordnetz und ein zweites Bordnetz eines Fahrzeugs, wozu ein erster Anschluss BN 1 und ein Masseanschluss GND 1 bzw. ein zweiter Anschluss BN 2 und ein Masseanschluss GND 2 vorgesehen sind. Die beiden Masseanschlüsse GND 1 und GND 2 liegen auf gleichem Potenzial und sind miteinander verbunden.

Zwischen dem ersten Anschluss BN1 und dem zweiten Anschluss BN2 ist eine Parallelschaltung von n Reihenschaltungen vorgesehen. Die Reihenschaltungen bestehen jeweils aus zwei zweiten steuerbaren Schaltelementen SW11, SW12, SWn1, SWn2 und einem Mehrphasen-Gleichspannungswandler MW 1, MWn. Die Mehrphasen-Gleichspannungswandler MW1, MWn einer Reihenschaltung sind zwischen den zwei zweiten steuerbaren Schaltelementen SW11, SW12, SW11, SWn2 der Reihenschaltung angeordnet. Durch ein Öffnen oder Schließen der zwei zweiten steuerbaren Schaltelemente in einer Reihenschaltung, kann ein Stromfluss durch den Mehrphasen-Gleichspannungswandler der Reihenschaltung ermöglicht oder verhindert werden. Infolgedessen kann ein Energietransport mittels des Mehrphasen-Gleichspannungswandlers der Reihenschaltung ermöglicht oder unterbunden werden.

Jeder der Mehrphasen-Gleichspannungswandler MW1, MWn weist m Wandlerschaltungen WS1.1, WS1.m, WSn.1, WSn.m auf.

Die Gleichspannungswandler-Schaltungsanordnung 1 weist außerdem eine Steuerung S auf, welche die Mehrphasen-Gleichspannungswandler MW1, MWn einschließlich ihrer Wandlerschaltungen WS1.1, WS1.m, WSn.1, WSn.m und auch die in Reihe zu den Mehrphasen-Gleichspannungswandlern MW1, MWn angeordneten zweiten steuerbaren Schaltelemente SW11, SW12, SWn1, SWn2 steuert.

Zur Steuerung der Mehrphasen-Gleichspannungswandler MW1, MWn bzw. ihrer Wandlerschaltungen WS1.1, WS1.m, WSn.1, WSn.m werden von der Steuerung Treibersignale TS erzeugt, die erste Schaltelemente der Wandlerschaltungen WS1.1, WS1.m, WSn.1, WSn.m auf bekannte Art und Weise ansteuern.

Die Steuerung ist mit einem Sensorelement zur Erfassung des Stroms über den zweiten Anschluss BN2 verbunden. Dazu weist die Steuerung einen Anschluss I(BN2) auf. Außerdem wird der Steuerung über einen Anschluss U(BN2) das Potenzial am zweiten Anschluss BN 2 zugeführt.

### Bezugszeichenliste

- 1: Gleichspannungswandler-Schaltungsanordnung

- MW1: Mehrphasen-Gleichspannungswandler 1
- MWn: Mehrphasen-Gleichspannungswandler n

- WS1.1: Wandlerschaltung 1 des Mehrphasen-Gleichspannungswandlers 1
- WS1.m: Wandlerschaltung des Mehrphasen-Gleichspannungswandlers 1
- WSn.1: Wandlerschaltung des Mehrphasen-Gleichspannungswandlers n
- WSn.m: Wandlerschaltung des Mehrphasen-Gleichspannungswandlers n

- SW11: zweites steuerbares Schaltelement
- SW12: zweites steuerbares Schaltelement
- SWn1: zweites steuerbares Schaltelement
- SWn2: zweites steuerbares Schaltelement

- S: Steuerung

- BN1: Anschluss zum Bordnetz 1
- BN2: Anschluss zum Bordnetz 2

- TS: Treibersignale

- I(BN2): Anschluss der Steuerung für die Stromerfassung im zweiten Bordnetz
- U(BN2): Anschluss der Steuerung für die Spannungserfassung im zweiten Bordnetz

## Patentansprüche

1. Gleichspannungswandler-Schaltungsanordnung (1),
- mit einem Mehrphasen-Gleichspannungswandler (MW1) zum Transportieren von Energie zwischen zwei Netzen umfassend mehrere Wandlerschaltungen (WS1.1, ..., WS1.m), wobei jede Wandlerschaltung (WS1.1, ..., WS1.m) wenigstens ein erstes steuerbares Schaltelement aufweist, und
- mit einer Steuerung (S) zur Erzeugung von mehreren Treibersignalen, wobei die Treibersignale (TS) unterschiedliche Phasen haben und mit jedem Treibersignal (TS) ein Schaltbetrieb einer der Wandlerschaltungen (WS1.1, ..., WS1.m) des Mehrphasen-Gleichspannungswandlers (MW1) steuerbar ist,
- wobei die Steuerung (S) zum Ermöglichen oder Unterbinden des Energietransports mittels eines der Mehrphasen-Gleichspannungswandlers (MW1, ..., MWn) geeignet und eingerichtet ist
**dadurch gekennzeichnet, dass**
- die Gleichspannungswandler-Schaltungsanordnung (1) wenigstens einen weiteren Mehrphasen-Gleichspannungswandler (MWn) zum Transportieren von Energie zwischen zwei Netzen umfassend mehrere Wandlerschaltungen (WSn.1, ..., WSn.m) aufweist, wobei jede Wandlerschaltung (WSn.1, ..., WSn.m) wenigstens ein erstes steuerbares Schaltelement aufweist,
- der Schaltbetrieb jeder Wandlerschaltung (WSn.1, ..., WSn.m) jedes weiteren Mehrphasen-Gleichspannungswandlers (MWn) mit einem der von der Steuerung (S) erzeugbaren Treibersignale (TS) steuerbar ist und
- dass in Reihe zu jedem Mehrphasen-Gleichspannungswandler (MW1, ..., MWn) der Gleichspannungswandler-Schaltungsanordnung (1) wenigstens ein zweites steuerbares Schaltelement (SW11, SW12, ..., SWn1, SWn2) angeordnet ist, wobei die zweiten steuerbaren Schaltelemente (SW11, SW12, ..., SWn1, SWn2) mittels der Steuerung (S) zum Ermöglichen oder Unterbinden des Energietransports zum Schließen bzw. Öffnen ansteuerbar sind.

2. Gleichspannungswandler-Schaltungsanordnung (1) nach Anspruch 1, **dadurch gekennzeichnet, dass** die Gleichspannungswandler-Schaltungsanordnung (1) einen ersten Anschluss (BN1) zur Verbindung mit einem ersten Netz und einen zweiten Anschluss (BN2) zur Verbindung mit einem zweiten Netz aufweist und dass die Reihenschaltungen aus den Mehrphasen-Gleichspannungswandlern (MW1, ..., MWn) und den zweiten steuerbaren Schaltelementen (SW11, SW12, ..., SWn1, SWn2) zwischen dem ersten Anschluss und dem zweiten Anschluss parallel geschaltet sind.

3. Gleichspannungswandler-Schaltungsanordnung (1) nach Anspruch 1, **dadurch gekennzeichnet,**
- **dass** die Gleichspannungswandler-Schaltungsanordnung (1) einen ersten Anschluss (BN1) zur Verbindung mit einem ersten Netz, einen zweiten Anschluss (BN2) zur Verbindung mit einem zweiten Netz und einen dritten Anschluss zur Verbindung mit einem dritten Netz aufweist,
- **dass** die Gleichspannungswandler-Schaltungsanordnung (1) wenigstens vier Reihenschaltungen aus den Mehrphasen-Gleichspannungswandlern (MW1, ..., MWn) und den zweiten steuerbaren Schaltelementen (SW11, SW12, ..., SWn1, SWn2) aufweist, nämlich wenigstens zwei erste Reihenschaltungen und zwei zweite Reihenschaltungen
- **dass** wenigstens zwei erste Reihenschaltungen zwischen dem ersten Anschluss (BN1) und dem zweiten Anschluss (BN2) parallel geschaltet sind und
- **dass** wenigstens zwei zweite Reihenschaltungen zwischen dem zweiten Anschluss (BN2) und dem dritten Anschluss parallel geschaltet sind.

4. Gleichspannungswandler-Schaltungsanordnung (1) nach Anspruch 1, **dadurch gekennzeichnet, dass** die Gleichspannungswandler-Schaltungsanordnung (1) n Anschlüsse aufweist und dass jeder Anschluss mit allen übrigen Anschlüssen oder mit einigen übrigen Anschlüssen über wenigstens zwei parallel geschaltete Reihenschaltungen aus einem der Mehrphasen-Gleichspannungswandler (MW1, ..., MWn) und wenigstens einem der zweiten steuerbaren Schaltelemente (SW11, SW12, ..., SWn1, SWn2) verbunden ist.

5. Gleichspannungswandler-Schaltungsanordnung (1) nach einem der Ansprüche 1 bis 4, **dadurch gekennzeichnet, dass** die Wandlerschaltungen (WS1.1, ..., WS1.m, ..., WSn.1, ..., WSn.m) eine gemeinsame Masse haben.

6. Gleichspannungswandler-Schaltungsanordnungen (1) nach einem der Ansprüche 1 bis 5, **dadurch gekennzeichnet, dass** die Mehrphasen-Gleichspannungswandler (MW1, ..., MWn) Drosseln aufweisen, über die die Wandlerschaltungen (WS1.1, ..., WS1.m, ..., WSn.1, ..., WSn.m)der Mehrphasen-Gleichspannungswandler (MW1, ..., MWn) miteinander gekoppelt sind.

## Claims

1. DC-DC converter circuit configuration (1),
- with a multi-phase direct voltage converter (MW1) for transporting energy between two networks, comprising several converter circuits (WS1.1,...; WS1.m), wherein each converter circuit (WS1.1,...; WS1.m) has at least a first controllable switch element, and
- with a control (S) for the generation of several driver signals, wherein the driver signals (TS) have different phases and with each driver signal (TS),a switch operation of one of the converter circuits (WS1.1,...; WS1.m) of the multi-phase direct voltage converter (MW1) can be controlled,
- wherein the control (S) is suitable and equipped for enabling or disabling the energy transport by means of one of the multi-phase direct voltage converters (MW1; ..., MWn),
**Characterized in that**
- the direct voltage converter circuit configuration (1) has at least one further multi-phase-direct voltage converter (MWn) for the transport of energy between two networks, comprising several converter circuits (WSn.1,...; WSn.m), each converter circuit (WSn.1,...; WSn.m) having at least a first controllable switch element,
- the switch operation of each converter circuit (WSn.1,...; WSn.m) of each further multi-phase direct voltage converter (MWn) can be controlled by means of a driver signal (TS) which can be generated by the control (S), and
- that at least a second controllable switch element (SW11, SW12,...SWn1, SWn2) is arranged in series for each multi-phase-direct voltage converter (MW1,..., MWn) in the direct voltage converter circuit configuration (1), wherein the second controllable switch elements (SW11, SW12,...SWn1, SWn2) can be controlled to allow or stop the energy transport for closing or opening by means of the control (S).

2. Direct voltage converter circuit configuration (1) according to Claim 1, **characterized in that** the direct voltage converter circuit configuration (1) has a first connection (BN1) for the connection with a first network, a second connection (BN2) for the connection with a second network, and that the series connections of the multi-phase-direct voltage converter (MW1,..., MWn) and the second controllable switch elements (SW11, SW12,...SWn1, SWn2) are connected in parallel between the first connection and the second connection.

3. Direct voltage converter circuit configuration (1) according to Claim 1,
**characterized in that**
- the direct voltage converter circuit configuration (1) has a first connection (BN1) for the connection with a first network, a second connection (BN2) for the connection with a second network and a third connection for the connection with a third network,
- the direct voltage converter circuit configuration (1) has at least four series connections of the multi-phase-direct voltage converter (MW1,..., MWn) and the second controllable switch elements (SW11, SW12,...SWn1, SWn2), namely at least two first series connections and two second series connections,
- that at least two first series connections between the first connection (BN1) and the second connection (BN2) are connected in parallel, and
- that at least two second series connections between the second connection (BN2) and the third connection are connected in parallel,

4. Direct voltage converter circuit configuration (1) according to Claim 1,
**characterized in that** the direct voltage converter circuit configuration (1) has n connections and that each connection is connected to all other connections or to several other connections by means of at least two series connections connected in parallel from one of the multi-phase-direct voltage converters (MW1,..., MWn) and at least one of the second controllable switch elements (SW11, SW12,...SWn1, SWn2).

5. Direct voltage converter circuit configuration (1) according to one of the Claims 1 to 4, **characterized in that** the converter circuits (WS1.1,...; WS1.m, ..., WSn.1, ..., WSn.m) have a common ground.

6. Direct voltage converter circuit configuration (1) according to one of the Claims 1 to 5, **characterized in that** the multi-phase-direct voltage converters (MW1,..., MWn) have chokes, by means of which the converter circuits (WS1.1,...; WS1.m, ..., WSn.1, ..., WSn.m) of the multi-phase-direct voltage converters (MW1,..., MWn) are linked with one another.

## Revendications

1. Agencement de circuit de convertisseur continu-continu (1),
- comportant un convertisseur continu-continu polyphasé (MW1) pour transporter de l'énergie entre deux réseaux, comprenant plusieurs circuits convertisseurs (WS1.1, ...., WS1.m), chaque circuit convertisseur (WS1.1, .... WS1.m) présentant au moins un premier élément de commutation commandable et
- avec une commande (S) pour générer plusieurs signaux de commande, les signaux de commande (TS) présentant de différentes phases et une opération de commutation de l'un des circuits convertisseurs (WS1.1, ..., WS1.m) du convertisseur continu-continu polyphasé (MW1) pouvant être commandée avec chaque signal de commande (TS),
- la commande (S) étant appropriée et configurée pour permettre ou empêcher le transport d'énergie au moyen de l'un des convertisseurs continu-continu polyphasé (MW1, ..., MWn),
**caractérisé en ce**
- **que** l'agencement de circuit de convertisseur continu-continu (1) présente au moins un autre convertisseur continu-continu polyphasé (MWn) pour le transport d'énergie entre deux réseaux, comprenant plusieurs circuits convertisseurs (WSn.1, ..., WSn.m), chaque circuit de convertisseur (WSn.1, ..., WSn.m) présentant au moins un premier élément de commutation commandable,
- **que** l'opération de commutation de chaque circuit de convertisseur (WSn.1, ...., WSn.m) de chaque autre convertisseur continu-continu polyphasé (MWn) peut être commandée par l'un des signaux de commande (TS) qui peuvent être générés par la commande (S), et
- **qu'**en série avec chaque convertisseur continu-continu polyphasé (MW1, ..., MWn) de l'agacement de circuit de convertisseur continu-continu (1) au moins un deuxième élément de commutation commandable (SW11, SW12, ..., SWn1, SWn2) est disposé, les deuxièmes éléments de commutation commandables (SW11, SW12, ..., SWn1, SWn2) pouvant être commandés au moyen de la commande (S) pour l'ouverture ou bien la fermeture pour permettre ou empêcher le transport d'énergie.

2. Agencement de circuit de convertisseur continu-continu (1) selon la revendication 1, **caractérisé en ce que** l'agencement de circuit de convertisseur continu-continu (1) présente une première connexion (BN1) pour la liaison avec un premier réseau et une deuxième connexion (BN2) pour la liaison avec un deuxième réseau et que les connexions en série des convertisseurs continu-continu polyphasés (MW1,..., MWn) et des deuxièmes éléments de commutation commandables (SW11, SW12, ..., SWn1, SWn2) sont connectées en parallèle entre la première connexion et la deuxième connexion.

3. Agencement de circuit de convertisseur continu-continu (1) selon la revendication 1, **caractérisé en ce**
- **que** l'agencement de circuit de convertisseur continu-continu (1) présente une première connexion (BN1) pour la liaison avec un premier réseau, une deuxième connexion (BN2) pour la liaison avec un deuxième réseau et une troisième connexion pour la liaison avec un troisième réseau,
- **que** l'agencement de circuit de convertisseur continu-continu (1) présente au moins quatre connexions en série des convertisseurs continu-continu polyphasés (MW1,..., MWn) et des deuxièmes éléments de commutation commandables (SW11, SW12, ..., SWn1, SWn2), à savoir au moins deux premières connexions en série et deux deuxièmes connexions en série,
- **qu'**au moins deux premières connexions en série sont connectées en parallèle entre la première connexion (BN1) et la deuxième connexion (BN2) et
- **qu'**au moins deux deuxièmes connexions en série sont connectées en parallèle entre la deuxième connexion (BN2) et la troisième connexion.

4. Agencement de circuit de convertisseur continu-continu (1) selon la revendication 1, **caractérisé en ce que** l'agencement de circuit de convertisseur continu-continu (1) présente n connexions et que chaque connexion est connectée à toutes les autres connexions ou à quelques autres connexions à travers au moins deux connexions en série connectées en parallèle de l'un des convertisseurs continu-continu polyphasés (MW1, ..., MWn) et avec au moins l'un des deuxièmes éléments de commutation commandables (SW11, SW12, ..., SWn1, SWn2).

5. Agencement de circuit de convertisseur continu-continu (1) selon l'une des revendications 1 à 4, **caractérisé en ce que** les circuits convertisseurs (WS1.1, ..., WS1.m, ..., WSn.1, ..., WSn.m) possèdent une masse commune.

6. Agencement de circuit de convertisseur continu-continu (1) selon l'une des revendications 1 à 5, **caractérisé en ce que** les convertisseurs continu-continu polyphasés (MW1, ..., MWn) présentent des étranglements sur lesquels les circuits convertisseurs (WS1.1, ..., WS1.m, ..., WSn.1, ..., WSn.m) des convertisseurs continu-continu polyphasés (MW1, ..., MWn) sont couplés entre eux.
